# EUROPEAN PATENT APPLICATION

(11) **EP 4 438 450 A1**
(43) Date of publication of application: **02.10.2024**
(21) Application number: 24167941.4
(22) Date of filing: 30.03.2024
(51) Int. Cl.: B62H 5/00, B62J 11/00, B62J 11/04, B62J 45/20

(54) **SYSTEMS AND METHODS FOR MOUNTING OBJECTS TO A FRAME**

(30) Priority: 31.03.2023 US 202363493348 P
(71) Applicant: Schlage Lock Company LLC, Carmel, IN 46032 (US)
(72) Inventor: WINTER, Arno, 48683 Ahaus Ottenstein (DE); SIEME, Joerg, 48346 Ostbevern (DE)
(74) Representative: ABREMA SA

(57) **Abstract**

Systems and methods are provided for mounting an object (16) or bracket (14) to a transportation device (18). A base assembly (30) is secured to a frame (12) of the transportation device (18) with a flexible fastener (20) that extends around the frame (12) and through at least one passage (78, 80) of the base assembly (30).

## Description

### TECHNICAL FIELD

The present disclosure relates to systems and methods for mounting objects, or brackets for holding one or more objects, on a frame. In an exemplary embodiment, the frame is part of a transportation device, and the one or more objects or brackets is mounted on the frame via a base assembly secured to the frame at a desired location.

### BACKGROUND

A variety of devices have been proposed for removably carrying objects, such as locks and water bottles, on a bicycle. The objectives of such devices are to carry the lock or water bottle securely on the bicycle frame without rattling, to position the lock or water bottle inconspicuously on the bicycle frame without hindering movement of the cyclist, and facilitate convenient release of or access to the lock or water bottle whenever needed.

While some frames may include fasteners for mounting bottle holders, locks, and other devices directly to the frame, other frames do not. Even when such fasteners are provided, the fasteners may not be suitable for the desired type of device to be mounted, or may not be at the desired location on the frame. Prior devices, such as plastic straps, have been used that are secured to frames to mount objects on the frame. However, such prior devices can be bulky, lack flexibility in length and/or placement on the frame, are not readily adaptable to the frame geometry, and/or are easily overtightened and damaged. Therefore, further improvements in this area are needed.

### SUMMARY

There is disclosed herein systems and methods for mounting objects and/or brackets used to carry one or more objects on transportation devices. The mounting systems and methods include a base assembly positionable at a desired location on the frame of the transportation device and a flexible fastener to secure the base assembly to the frame. The frame can be part of any suitable transportation device, such as a bicycle, motorcycle, scooter, utility vehicle, all-terrain vehicle, cart, or the like. More specifically, there is provided a mounting system as recited in claim 1, as well as a method for mounting an object or bracket to a transportation device as recited in independent claim 12. Advantageous embodiments of the invention form the subject-matter of the dependent claims.

The base assembly is configured to allow a bracket or other object to be secured to the base assembly to securely retain the bracket or object on the transportation device in a manner and/or location that does not interfere with operation or handling of the transportation device and which also provides access to the bracket or object. The object can be, for example, a lock, container, receptacle, water bottle, compartment, electronic device, and/or a bracket for holding such objects on the frame via the base assembly. In an embodiment, the object is secured directly to the base assembly without a bracket. In an embodiment, the bracket is secured directly to the base assembly and the object is carried by the bracket. Further embodiments, forms, features, and aspects of the present application shall become apparent from the description and figures provided herewith.

### BRIEF DESCRIPTION OF THE DRAWINGS

FIG. 1A shows various components of a mounting system according to an embodiment of the disclosure for mounting a bracket or object to a frame of a transportation device such as shown in FIG. 1B.
FIG. 2 is a perspective view of a part of a flexible fastener of the mounting system of claim 1.
FIG. 3 is a perspective view of a plate assembly of the mounting system of FIG. 1.
FIG. 4 is a perspective view of a slider for a fastener tensioner of the mounting system of FIG. 1.
FIG. 5 is a perspective view of a first plate of the plate assembly of FIG. 3 showing the placement of bracket nuts into the first plate.
FIG. 6 is a perspective view of the plate assembly of FIG. 3 showing a second plate positioned against the inner side of the first plate of FIG. 5.
FIG. 7 is a perspective view showing the plate assembly positioned against a frame of a transportation device.
FIG. 8 is a perspective view showing engagement of the end stop of the flexible fastener to the first plate of the plate assembly.
FIG. 9 is a perspective view that shows insertion of the flexible fastener through a first passage along the first plate of the plate assembly after wrapping the flexible fastener around the frame.
FIG. 10 is a perspective view that shows insertion of the flexible fastener through a second passage of the first plate of the plate assembly after wrapping the flexible fastener around the frame a second time.
FIG. 11 is a perspective view that shows engagement of the fastener tensioner to the first plate of the plate assembly.
FIG. 12 is another perspective view that shows engagement of the flexible fastener with the fastener tensioner.
FIG. 13 is another perspective view that shows tightening of the flexible fastener with the fastener tensioner.
FIG. 14 shows positioning of a bracket onto the base assembly secured to the frame.
FIG. 15 shows engagement of the bracket to the base assembly.
FIG. 16 shows another embodiment of the second plate of the mounting system secured to the frame with the flexible fastener.
FIG. 17 shows another embodiment of the first plate for use with the second plate of FIG. 16.
FIG. 18 shows the first plate of FIG. 17 engaged to the second plate of FIG. 16 to form a base assembly on the frame.
FIG. 19 is a section view showing positioning of a bracket onto the base assembly of FIG. 18.
FIG. 20 is a section view showing engagement of the bracket to the base assembly of FIG. 18.
FIG. 21 is a perspective view of another embodiment fastener coupler for securing the fastener to the base assembly.
FIG. 22 is a perspective view of another embodiment flexible fastener for securing the base assembly to the frame.
FIG. 23 is an exploded view of another embodiment of a mounting system according to the disclosure for mounting a bracket or object to a frame of a transportation device such as shown in FIG. 1B.
FIG. 24 is a perspective view of a plate assembly of the mounting system of FIG. 23.
FIG. 25 is a perspective view showing the plate assembly of FIG. 24 positioned against a frame of a transportation device.
FIG. 26 is a perspective view showing engagement of the flexible fastener to the plate assembly of FIG. 25.
FIG. 27 is another perspective view that shows engagement of the flexible fastener with a fastener tensioner of the mounting system of FIG. 23.
FIG. 28 is another perspective view that shows tightening of the flexible fastener with the fastener tensioner of FIG. 27.

### DETAILED DESCRIPTION

Although the concepts of the present disclosure are susceptible to various modifications and alternative forms, specific embodiments have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. It should further be appreciated that although reference to a "preferred" component or feature may indicate the desirability of a particular component or feature with respect to an embodiment, the disclosure is not so limiting with respect to other embodiments, which may omit such a component or feature. Further, when a particular feature, structure, or characteristic is described in connection with an embodiment, it is submitted that it is within the knowledge of one skilled in the art to implement such feature, structure, or characteristic in connection with other embodiments whether or not explicitly described.

Additionally, it should be appreciated that items included in a list in the form of "at least one of A, B, and C" can mean (A); (B); (C); (A and B); (B and C); (A and C); or (A, B, and C). Similarly, items listed in the form of "at least one of A, B, or C" can mean (A); (B); (C); (A and B); (B and C); (A and C); or (A, B, and C). Items listed in the form of "A, B, and/or C" can also mean (A); (B); (C); (A and B); (B and C); (A and C); or (A, B, and C). Further, with respect to the claims, the use of words and phrases such as "a," "an," "at least one," and/or "at least one portion" should not be interpreted so as to be limiting to only one such element unless specifically stated to the contrary, and the use of phrases such as "at least a portion" and/or "a portion" should be interpreted as encompassing both embodiments including only a portion of such element and embodiments including the entirety of such element unless specifically stated to the contrary.

In the drawings, some structural or method features may be shown in certain specific arrangements and/or orderings. However, it should be appreciated that such specific arrangements and/or orderings may not necessarily be required. Rather, in some embodiments, such features may be arranged in a different manner and/or order than shown in the illustrative figures unless indicated to the contrary. Additionally, the inclusion of a structural or method feature in a particular figure is not meant to imply that such feature is required in all embodiments and, in some embodiments, may be omitted or may be combined with other features.

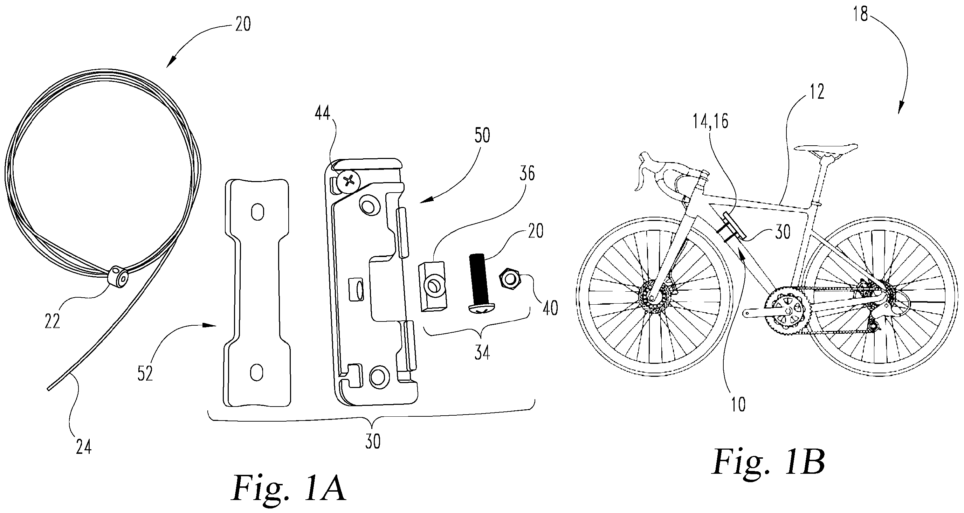

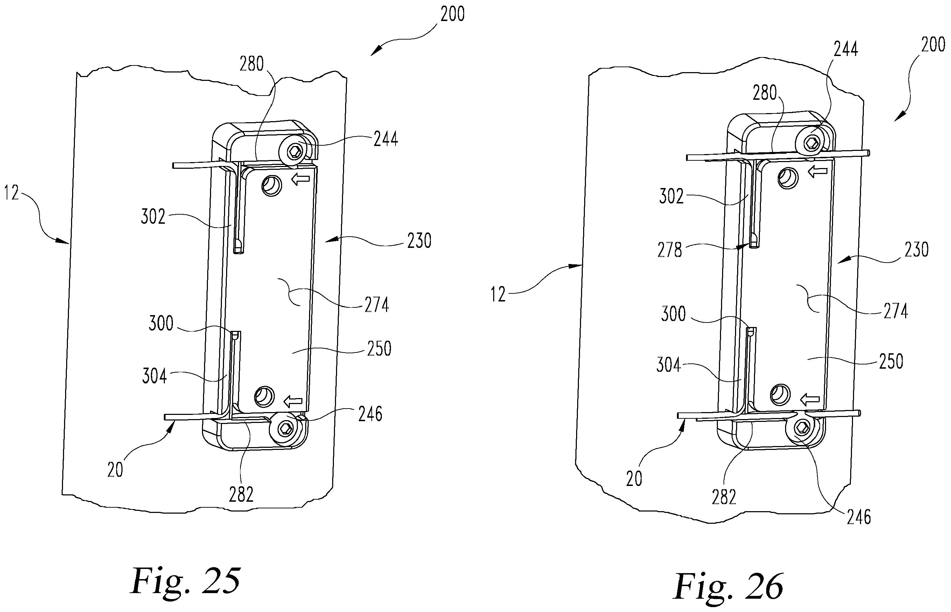

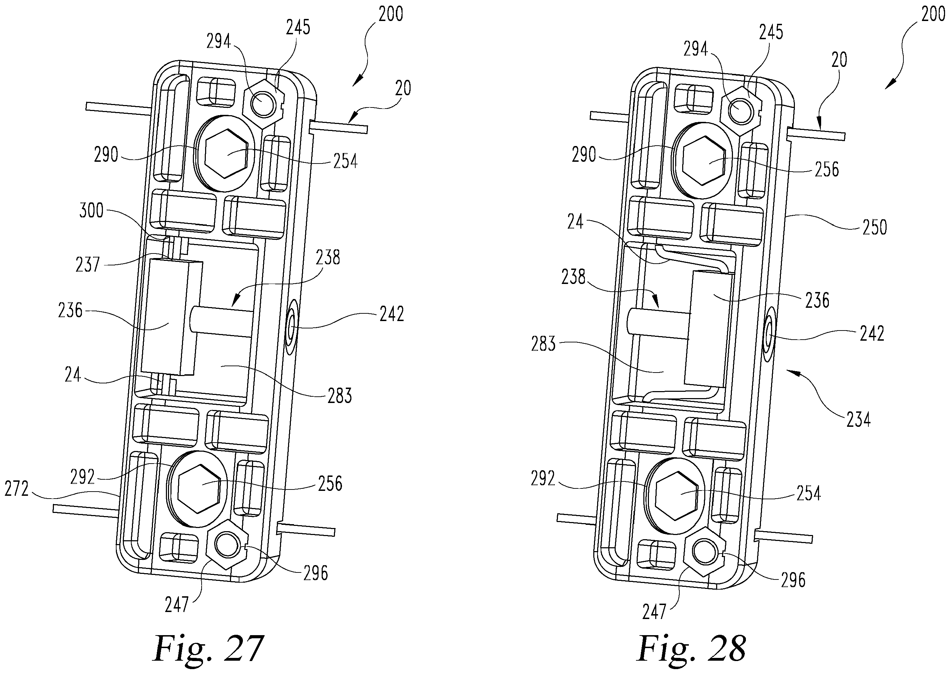

Referring to FIGs. 1A-28, there is disclosed herein systems and methods for mounting an object 16 and/or bracket 14 to a frame 12 of a transportation device 18. The mounting system 10, 200 includes a base assembly 30, 30', 230 that can be secured to the frame 12 of the transportation device 18 at any one of a number of positions. The object 16 or bracket 14 can then be secured to the base assembly 30, 30', 230. The object 16 can be, for example, a lock, container, receptacle, water battle, compartment, electronic device, and/or a bracket 14 for holding such objects 16. Additionally, while the mounting system 10, 200 illustrated herein is shown attached to a bicycle frame, the present disclosure is not limited to such, but may be utilized in various applications and with various transportation devices 18, including, but not limited to, bikes, motorcycles, scooters, all-terrain vehicles, utility vehicles, three-wheeled vehicles, and carts, for example.

Mounting system 10, 200 mounts object 16 or bracket 14 to transportation device 18. The mounting system 10, 200 includes base assembly 30, 30', 230 positionable against frame 12 of the transportation device 18. The base assembly 30, 30' 230 includes at least one longitudinal passage 78, 278 orientable along the frame 12, optionally a receptacle 76, and/or at least one second passage 80, 280 that is transverse to the longitudinal passage 78, 278. In an embodiment, the mounting system 10 includes a flexible fastener 20 with a first end 26 fixedly engageable to the base assembly 30, 30' in the receptacle 76. Flexible fastener 20 includes an elongated flexible body 24. The elongated flexible body 24 positionable around the frame 12 and through the at least one longitudinal passage 78, 278 and/or the at least one second passage 80, 280. At least one fastener coupler 44, 44', 118, 244 couples the flexible fastener 20 to the base assembly 30, 30', 230.

A method for mounting the object 16 or bracket 14 to the transportation device 18 includes positioning the base assembly 30, 30', 230 against the frame 12 with at least one passage 78, 278 of the base assembly 30, 30', 230 oriented along the frame 12 and at least one second passage 80, 280 oriented transversely to the frame and flexible fastener extending through the at least one passage 78, 278; wrapping the flexible fastener 20 in a first direction around the frame 12; positioning the flexible fastener 20 through the at least one second passage 80, 280 transvers to the frame 12; and coupling the flexible fastener 20 in the at least one second passage 80, 280 to the base assembly 30, 30', 230.

There is shown a disassembled mounting system 10 in FIG. 1A, and mounting system 10 shown schematically on transportation device 18 in FIG. 1B to secure object 16 or bracket 14 to frame 12 of transportation device 18. Mounting system 10 includes flexible fastener 20 and base assembly 30. The flexible fastener 20 is engaged at one end to base assembly 30, wrapped around frame 12 and through passages 78, 80 of base assembly 30 to secure base assembly 30 to frame 12. A fastener tensioner 34 is provided to tension or tighten flexible fastener 20 once positioned around frame 12 and coupled to base assembly 30 with fastener coupler 44.

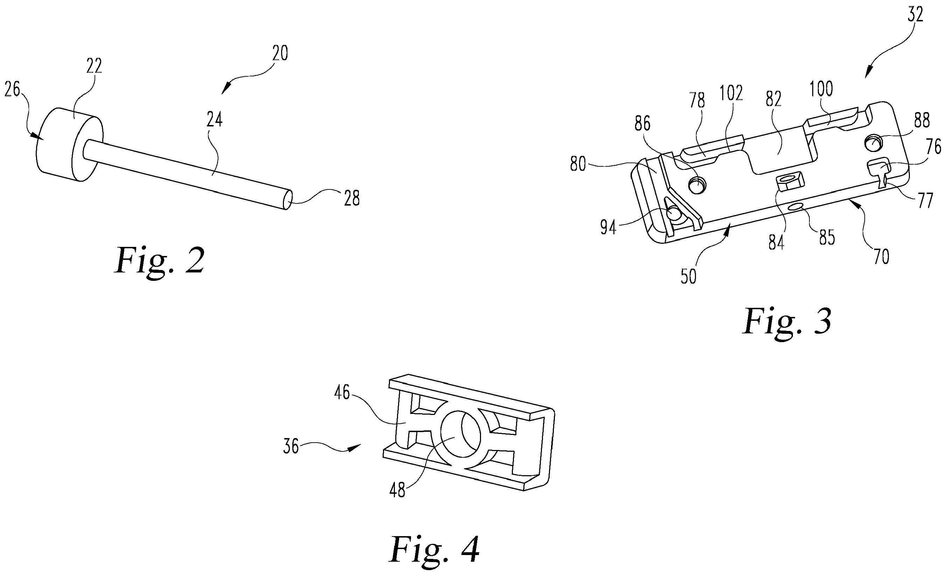

Referring to FIG. 2, flexible fastener 20 is shown. Flexible fastener 20 includes an elongated flexible body 24 that extends from a first end 26 to a second end 28. In an embodiment, body 24 is a cable. In an embodiment, body 24 is coated in a non-abrasive or soft material to protect frame 12 from scratching or damage from body 24. In other embodiments, body 24 is a wire, strap, cord, or other suitable member that can be wrapped around frame 12 and positioned through the passages 78, 80 of base assembly 30. In an embodiment, flexible fastener 20 includes an end stop 22 at first end 26. End stop 22 can be a flange or other structure protruding outwardly from body 24 so that end stop 22 can be positioned in receptacle 76 of base assembly 30 to fixedly secure the first end 26 of flexible member 20 to base assembly 30. As used herein, "fixedly secure" means that flexible fastener 20 can be wrapped around frame 12 with end member 22 in receptacle 76 without de-coupling from base assembly 30.

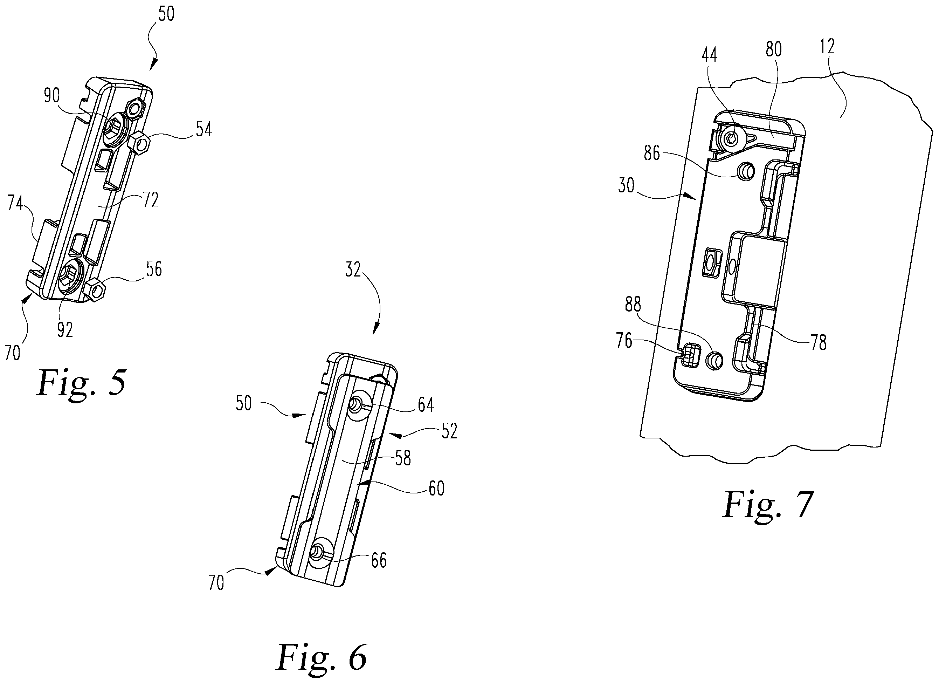

Referring to FIG. 3, one side of a plate assembly 32 which comprises a portion of base assembly 30 is shown. Plate assembly 32 includes a first plate 50 and a second plate 52 (FIG. 6.) First plate 50 forms an outer side of plate assembly 32 facing away from frame 12, and second plate 52 is located at an inner side of plate assembly 32 and faces toward frame 12. First plate 50 includes a rectangular-shaped body 70 having an inner side 72 (FIG. 5) and an opposite outer side 74. In an embodiment, second plate 52 is made from an elastomer, rubber, or other soft or non-abrasive material that will not scrape or damage frame 12.

Outer side 74 of first plate 50 includes first passage 78 extending longitudinally along plate body 70 that is alignable along frame 12, and second passage 80 that extends laterally across plate body 70 in a transverse orientation to first passage 78. Passages 78, 80 are shown as grooves or channels with an open side formed in an outer side 74 of plate 50, but in other embodiments may be formed as bores enclosed on all sides, or a combination of grooves, channels and bores. Outer side 74 of first plate 50 also includes receptacle 76 for receiving end stop 22 of flexible fastener 20, slider cavity 82 for receiving slider 36 of fastener tensioner 34, and slider nut receptacle 84 for receiving slider nut 40 of fastener tensioner 34. A slot 77 extends from receptacle 76 through the side of plate 50 and body 24 of flexible fastener 20 is positionable to extend through slot 77.

First plate 50 includes coupler bore 94 in second passage 80. Coupler bore 94 receives and engages fastener coupler 44 so that fastener coupler 44 can clamp or otherwise secure body 24 of flexible fastener 20 in second passage 80. In the illustrated embodiment, second passage 80 is Y-shaped around coupler bore 94 to allow fastener coupler 44 to be fully seated against flexible fastener 20 in second passage 80 and/or to also provide alternative paths to feed flexible fastener 20 through second passage 80. First plate 50 also includes fastener bores 86, 88 for receiving fasteners to secure the bracket 14 or object 16 to base assembly 30.

In the illustrated embodiment, slider cavity 82 interrupts first passage 78 so that slider 36 can engage body 24 of flexible fastener 20. First passage 78 includes a first portion 100 and a second portion 102 separated by slider cavity 82. Body 24 of flexible fastener 20 spans the gap between first and second portions 100, 102 so that an inner side 46 of slider 36 (FIG. 4) contacts flexible fastener 20 in the slider cavity 82. As discussed further below, slider 36 can be displaced into slider cavity 82 with slider adjuster 38 to tension or tighten flexible fastener 20. Slider 36 includes a rectangular body with a recessed inner side 46 to capture body 24 therein. Slider 36 includes a bore 48 that receives slider screw 42 of slider adjuster 38 therethrough to engage slider nut 40 in slider nut receptacle 84.

Referring to FIG. 5, first plate 50 of plate assembly 32 is further shown looking at inner side 72. Inner side 72 is recessed and also includes first and second nut receptacles 90, 92 to receive respective ones of the bracket nuts 54, 56. As shown in FIG. 6, second plate 52 is then positioned within the recessed inner side 72 of first plate 50 to capture bracket nuts 54, 56 between first and second plates 50, 52. Second plate 52 includes a plate body 60 with a concave inner side 58 positionable toward frame 12 and an opposite outer side 62 positioned toward first plate 50. Second plate 52 also includes first and second holes 64, 66 that align with nut receptacles 90, 92 and receive the parts of bracket fasteners 104, 106 projecting from bracket nuts 54, 56.

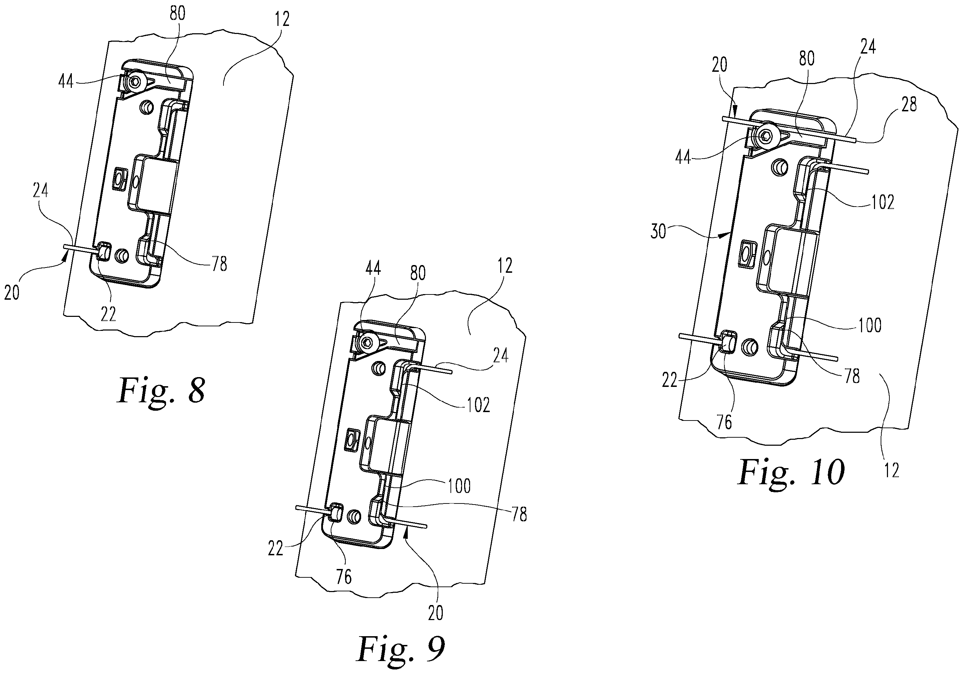

Referring to FIG. 7, the fastener coupler 44 is provisionally engaged to plate assembly 32 to form base assembly 30. Base assembly 30 is positioned at a desired position on frame 12 with first passage 78 extending along the frame 12. As shown in FIG. 8, end stop 22 of flexible fastener 20 is placed in receptacle 76 to axially secure flexible fastener 20 to base assembly 30.

Referring to FIG. 9, body 24 of flexible fastener 20 is wrapped in a first direction around frame 12 at a first location, and inserted through first passage 78 so that flexible fastener 20 extends along frame 12 to be wrapped around frame 12 at a second location spaced along frame 12 from the first location. The entrance into first passage 78 at first portion 100, and the exit from first passage 78 at second portion 102, can be curved and extend laterally through the sidewall of plate body 70 to facilitate placement of flexible fastener 20 into, through, and out of first passage 78.

As shown in FIG. 10, flexible fastener 20 is then wrapped in a second direction, opposite the first direction, around frame 12 and inserted through second passage 80. Fastener coupler 44 is then tightened to couple flexible fastener 20 to base assembly 30 in second passage 80. Any excess length of flexible fastener 20 extending from second passage 80 can then be removed.

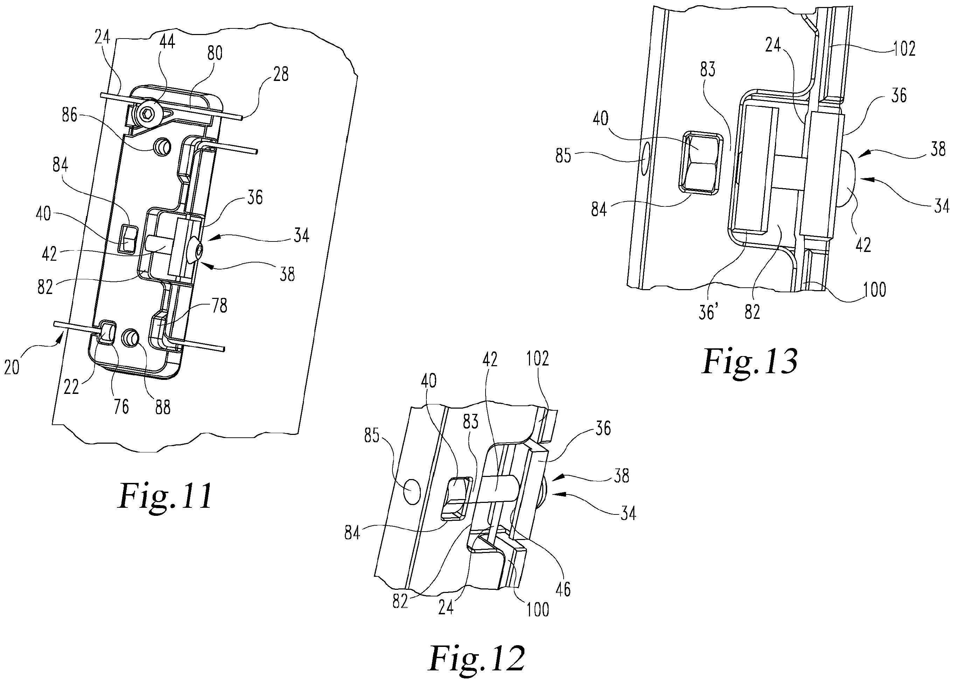

While flexible fastener 20 can be tightened around frame 12 and then secured in the tightened position using fastener coupler 44, further tensioning and tightening of flexible fastener 20 around frame 12 may be desired to ensure base assembly 30 remains in position on frame 12. FIGs. 11-13 further show fastener tensioner 34 that can be used for this purpose.

Fastener tensioner 34 includes a slider 36 in slider cavity 82 of base assembly 30. A slider adjuster 38 is used to couple slider 36 to base assembly 30 and move slider 36 to tighten flexible fastener 20. In the illustrated embodiment, slider adjuster 38 includes a slider nut 40 housed in slider nut receptacle 84 of base assembly 30, and a slider screw 42 extending through slider 36. Slider screw 42 extends through a wall 83 of plate 50 between slider cavity 82 and slider nut receptacle 84 to engage slider nut 40 in slider nut receptacle 84. Slider screw 42 can extend into a bore 85 extending from slider nut receptacle 84 into first plate 50 as slider adjuster 38 is tightened.

The inner side 46 of slider 36 contacts the part of body 24 of flexible member 20 that extends through slider cavity 82. As slider screw 42 is rotated and slider nut 40 is held in place, slider screw 42 and slider 36 move into slider cavity 82, as indicated by slider 36' in FIG. 13. In this position, flexible fastener 20 is tightened and tensioned around frame 12.

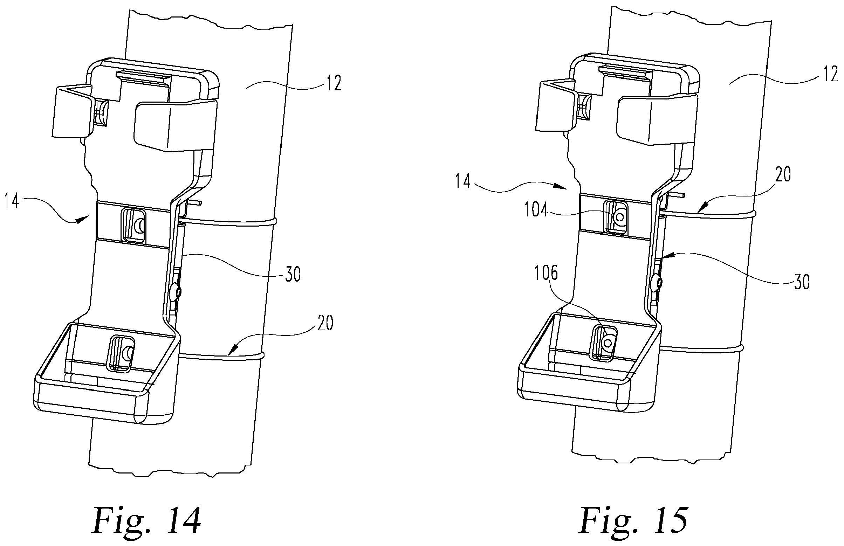

Referring to FIGs. 14-15, bracket 14 is shown being moved into position relative to the base assembly 30 after base assembly 30 is secured to frame 12. Bracket fasteners 104, 106 can be engaged to bracket bores 86, 88, respectively, in order to secure bracket 14 to base assembly 30. In particular, bracket fasteners 104, 106 engage respective ones of the bracket nuts 54, 56 housed in receptacles 90, 92 between plates 50, 52 of base assembly 30. An object 16 can then be placed into bracket 14. Alternatively, as discussed above, object 16 can be secured directly to base assembly 30.

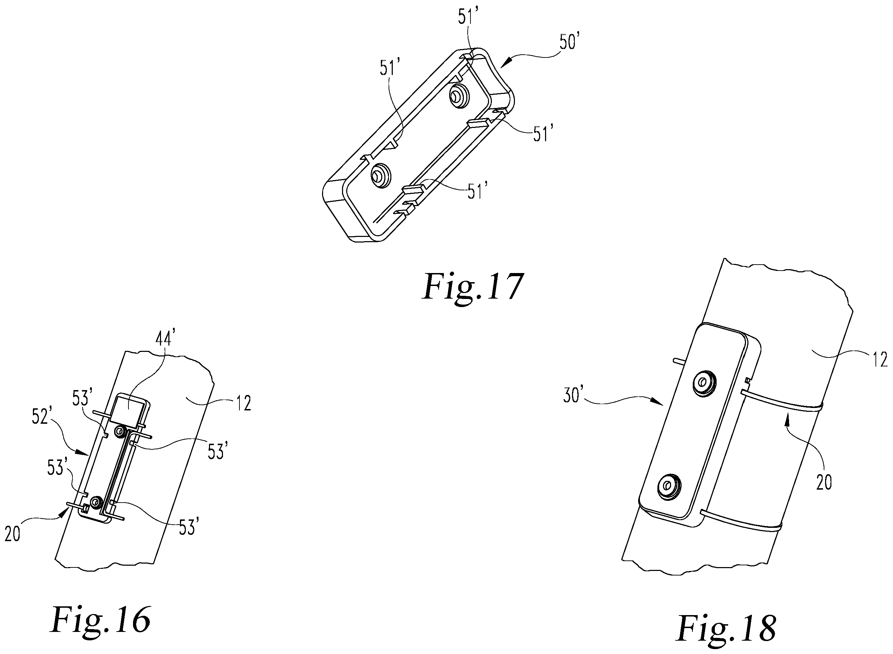

Another embodiment of base assembly 30' is shown in FIGs. 16-18 and includes features similar to base assembly 30 except as otherwise noted. For base assembly 30', first passage 78' and second passage 80' are provided on second plate 52', and second plate 52' is secured to frame 12 with flexible fastener 20. The fastener coupler 44' in this embodiment is a clamping box that is secured to second plate 52' in a recess on plate 52' in order to couple flexible fastener 20 to second plate 52'. First plate 50', such as shown in FIG. 17, is then placed over second plate 52' to form the base assembly 30', as shown in FIG. 18. Plate 50' includes a recess configured to receive second plate 52', and plates 50', 52' can include features to facilitate alignment and engagement with one another, such as splines 51' and slots 53' that receive splines 51'.

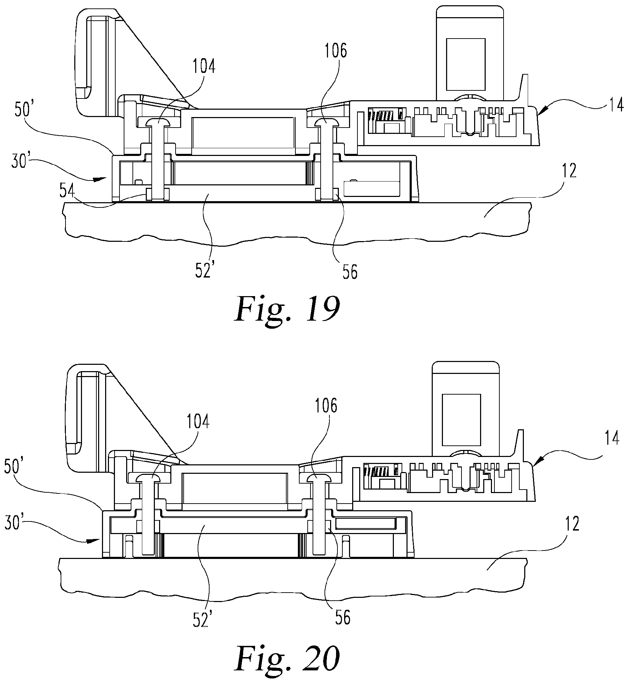

As shown in FIGs. 19-20, bracket 14 is secured to base assembly 30' using bracket fasteners 104, 106 that extend through first plate 50' and engage bracket nuts 54, 56 located between second plate 52' and frame 12. As the fasteners 104, 106 are tightened, second plate 52' is lifted into first plate 50' to tighten and tension flexible fastener 20. As a result, slider 36 and slider adjuster 38 can be eliminated in this embodiment.

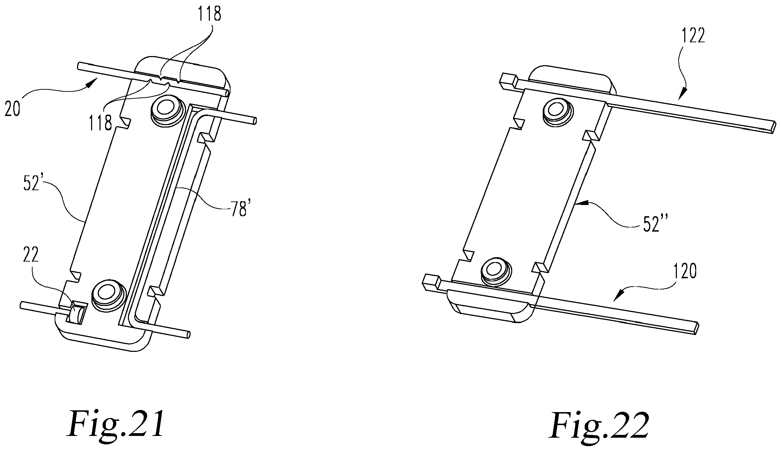

In FIG. 21, another embodiment of fastener coupler 44 is shown on second plate 52', but could also be employed with first plate 50. In FIG. 21, the fastener coupler includes a plurality of pins 118 that project into second passage 80' and cinch or crimp the body 24 of flexible fastener 20 in second passage 80'.

In another embodiment shown in FIG. 22, flexible fastener 20 is replaced by straps 120, 122 that extend around frame 12 and second plate 52" to secure the base assembly to the frame. In this embodiment, the first passage 78' can be omitted from the plate.

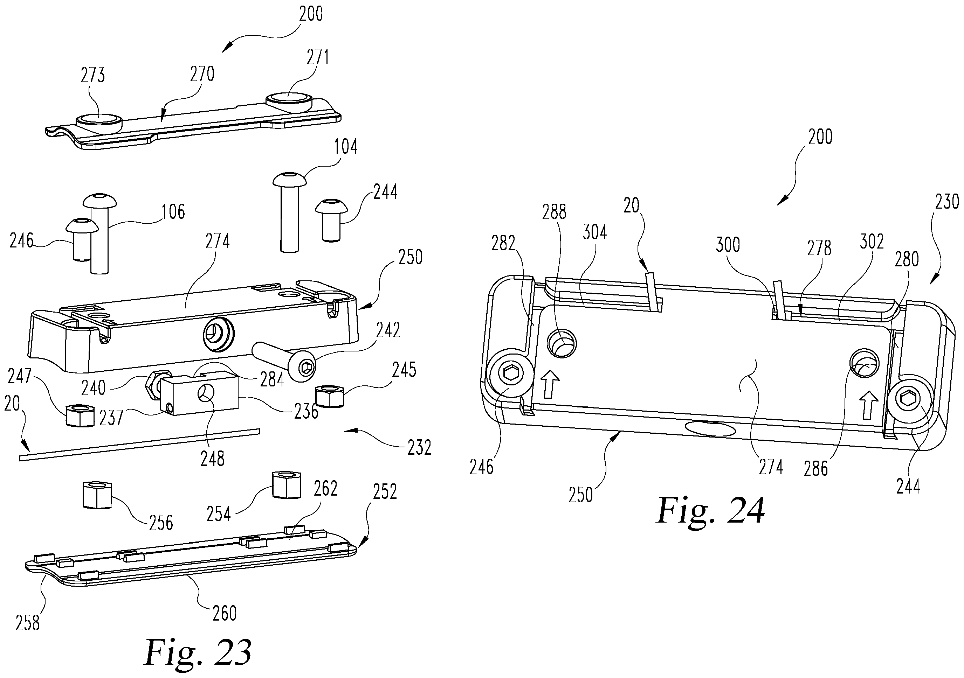

There is shown another embodiment mounting system 200 in FIGs. 23-28. Mounting system 200 can be mounted on transportation device 18 in FIG. 1B to secure object 16 or bracket 14 to frame 12 of transportation device 18. Mounting system 200 also employs flexible fastener 20, but does not employ an end stop 22 at first end 26. The flexible fastener 20 extends longitudinally through a first passage 278 of base assembly 230, is wrapped around frame 12 and through each of the two second passages 280, 282 of base assembly 230 to secure base assembly 230 to frame 12. A fastener tensioner 234 is provided to tension or tighten flexible fastener 20 once positioned around frame 12 and coupled to base assembly 230 with fastener couplers 244, 246.

A plate assembly 232 comprises a portion of base assembly 230. Plate assembly 232 includes a first plate 250 and a second plate 252. First plate 250 forms an outer side of plate assembly 232 facing away from frame 12, and second plate 252 is located at an inner side of plate assembly 232 and faces toward frame 12. In an embodiment, spacer 270 is provided between frame 12 and second plate 252. Spacer 270 can be made from an elastomer, rubber, or other soft or non-abrasive material that will not scrape or damage frame 12. In an embodiment, second plate 252 is omitted and spacer 270 is mounted directly to first plate 250.

Outer side 274 of first plate 250 includes first passage 278 extending longitudinally along first plate 250 that is alignable along frame 12, and two second passages 280, 282 that extend laterally across plate 250 in a transverse orientation to first passage 278. First passage 278 includes an enclosed bore portion 300 and outer first and second portions 302, 304 that form grooves or channels extending from bore portion 300 to second passages 280, 282 at opposite ends of first plate 250. Second passages 280, 282 are shown as grooves or channels with an open side formed in outer side 274 of plate 250, but in other embodiments may be formed as bores enclosed on all sides, or a combination of grooves, channels and bores. First plate 250 also includes slider cavity 283 for receiving slider 236 of fastener tensioner 234, and slider 236 includes slider nut receptacle 284 for receiving slider nut 240 of fastener tensioner 234.

First plate 250 includes coupler bores 294, 296 in second passages 280, 282, respectively. Coupler bores 294, 296 receive and engage fastener couplers 244, 246 and fastener coupler nuts 245, 247 so that fastener couplers 244, 246 can clamp or otherwise secure body 24 of flexible fastener 20 in corresponding ones of the second passages 280, 282. In the illustrated embodiment, second passages 280, 282 are linear, and coupler bores 294, 296 overlap the adjacent second passage 280, 282 to allow fastener couplers 244, 246 to be fully seated against flexible fastener 20 in second passages 280, 282. First plate 250 also includes fastener bores 286, 288 for receiving fasteners 104, 106 to secure the bracket 14 or object 16 to base assembly 230.

In the illustrated embodiment, slider cavity 283 interrupts or aligns with bore portion 300 of first passage 278 so that body 24 of flexible fastener 20 can pass through bore 237 of slider 236. Body 24 of flexible fastener 20 spans the gap between first and second portions 300, 302 so that slider 236 is movable to displace flexible fastener 20 in the slider cavity 283. As discussed further below, slider 236 can be displaced into slider cavity 283 with slider adjuster 238 to tension or tighten flexible fastener 20. Slider 236 includes a rectangular body with a through bore 237 to capture body 24 therein. Slider 236 includes a bore 248 that receives slider screw 242 of slider adjuster 238 therethrough to engage slider nut 240 in slider nut receptacle 284.

Inner side 272 of first plate 250 is recessed and also includes first and second nut receptacles 290, 292 to receive respective ones of the bracket nuts 254, 256. Second plate 252, if provided, is then positioned within the recessed inner side 272 of first plate 250 to capture bracket nuts 254, 256 between first and second plates 250, 252. Second plate 252 includes a plate body 260 with a concave inner side 258 positionable toward frame 12 and an opposite outer side 262 positioned toward first plate 250. Additionally or alternatively, spacer 270 may be secured to second plate 252 and/or secured directly to first plate 250. Spacer 270 may include projections 271, 273 that that align with nut receptacles 290, 292 to facilitate assembly.

The fastener couplers 244, 246 are provisionally engaged to plate assembly 232 with flexible fastener 20 positioned through bore 237 of slide 236 and enclosed bore portion 300 of first passage 278 to form base assembly 230. Base assembly 230 is positioned at a desired position on frame 12 with first passage 278 extending along the frame 12. Opposite end portions of body 24 of flexible fastener 20 are inserted into first and second portions 300, 302 of first passage 278 and wrapped in a first direction around frame 12 at first and second locations generally aligned with respective ones of the second passages 280, 282. First and second fastener couplers 244, 246 are then tightened to couple flexible fastener 20 to base assembly 230 in second passages 280, 282. Any excess length of flexible fastener 20 extending from second passages 280, 282 and/or base assembly 230 can then be removed.

While flexible fastener 20 can be tightened around frame 12 and then secured in the tightened position using fastener couplers 244, 246, further tensioning and tightening of flexible fastener 20 around frame 12 may be desired to ensure base assembly 230 remains in position on frame 12. Fastener tensioner 234 that can be used for this purpose. A slider adjuster 238 is used to couple slider 236 to base assembly 230 and move slider 236 to tighten flexible fastener 20. In the illustrated embodiment, slider adjuster 238 includes slider nut 240 housed in slider nut receptacle 284 of slider 236, and slider screw 242 extending through slider 236. Slider screw 242 extends through a wall of plate 250 into slider cavity 283 to engaged slider 236. As slider screw 242 is rotated and slider nut 240 is held in place, slider 236 moves in slider cavity 283 so that flexible fastener 20 is tightened and tensioned around frame 12.

In an embodiment, a method includes removing a part of the flexible fastener 20 extending outwardly from the second passage 80, 80', 280, resp. 282 and/or base assembly 30, 30', 230 after coupling the flexible fastener 20 in the second passage 80, 80', 280, resp. 282. In an embodiment, a method includes tensioning the flexible fastener 20 around the frame 12 after coupling the flexible fastener 20 to the base assembly 30, 30', 230 by adjusting a fastener tensioner 34, 234 mounted to the base assembly 30, 30', 230. In an embodiment, a method includes mounting the bracket 14 or object 16 to the base assembly 30, 30', 230 after tensioning the flexible fastener 20.

In an embodiment, the first end 26 of the flexible fastener 20 is fixed to the base assembly 30, 30' by restraining an end stop 22 of the flexible fastener 20 in a fastener receptacle 76 of the base assembly 30, 30', and extending the flexible body 24 of the flexible fastener 20 through slot 77 that extends from the receptacle 76 through the base assembly 30, 30'.

Various aspects of the present disclosure are contemplated. According to one aspect, a mounting system for mounting an object or bracket to a transportation device is provided. The mounting system includes a base assembly positionable against a frame of the transportation device and a flexible fastener. The base assembly includes a first passage orientable along the frame and at least one second passage transversely oriented to the first passage. The flexible fastener includes an elongated flexible body extending through the first passage and positionable around the frame and through the at least one second passage. The mounting system further includes at least one fastener coupler to couple the flexible fastener in the at least one second passage.

In an embodiment, the at least one second passage of the base assembly includes two second passages that each extend transversely to the first passage. The elongated flexible body of the flexible fastener is positionable around the frame from opposite ends of the first passage and through each of the two second passages. The at least one fastener coupler includes two fastener couplers that couple the flexible fastener in respective ones of the two second passages.

In an embodiment, the mounting system includes a fastener tensioner engageable to the base assembly and the flexible fastener. The fastener tensioner is configured to tighten and tension the flexible fastener around the frame with the flexible body of the flexible fastener fixedly coupled to the base assembly with the fastener coupler.

In a further embodiment, the fastener tensioner includes a slider engageable to the flexible fastener and a slider adjuster engageable to the base assembly and the slider. The slider adjuster is configured to displace the slider relative to the base assembly to tighten the flexible fastener.

In a further embodiment, the slider adjuster includes a slider nut and a slider screw. The base assembly includes a slider cavity for receiving the slider. The slider nut is received in a slider nut receptacle and the slider screw extends through the slider and the base assembly and engages the slider nut in the slider nut receptacle.

In an embodiment, a first end of the flexible fastener includes an end stop with a flange that is positioned in a receptacle of the base assembly to fixedly engage the flexible fastener to the base assembly.

In a further embodiment, the flexible fastener includes a cable extending from the first end to an opposite second end.

In an embodiment, the at least one fastener coupler is a threaded fastener threadingly engaged to the base assembly to secure the flexible body in the at least one second passage.

In an embodiment, the at least one fastener coupler is a clamp that is engaged to the base assembly to secure the flexible body in the at least one second passage.

In an embodiment, the at least one fastener coupler is a plurality of pins that project into the at least one second passage to secure the flexible body in the at least one second passage.

In an embodiment, the base assembly includes a first plate and a second plate. The second plate is positionable against the frame and the first plate is positioned on the second plate.

In a further embodiment, the first plate includes an inner side facing the second plate and an opposite outer side. The inner side includes a first nut receptacle and a second nut receptacle.

The first plate further includes a first fastener bore aligned with the first nut receptacle and a second fastener bore aligned with the second nut receptacle.

In a further embodiment, the mounting system includes a first nut in the first nut receptacle and a second nut in the second nut receptacle.

In a further embodiment, the mounting system includes a first bracket fastener extending through the first fastener bore and in engagement with the first nut in the first nut receptacle. The mounting system also includes a second bracket fastener extending through the second fastener bore and in engagement with the second nut in the second nut receptacle. The first and second bracket fasteners secure the object or bracket to the base assembly.

In a further embodiment, the first plate includes the first passage and the at least one second passage. The first plate includes an inner side facing the second plate, and the second plate is positioned within a recess at the inner side of the first plate.

In a further embodiment, the second plate includes the first passage and the at least one second passage. The first plate includes an inner side facing the second plate, and the second plate is positioned within a recess at the inner side of the first plate.

According to another aspect of the present disclosure, a method for mounting an object or bracket to a transportation device includes: positioning a base assembly against a frame of the transportation device with a first passage of the base assembly oriented along the frame and at least one second passage oriented transversely to the frame; positioning a flexible fastener to extend through the first passage; wrapping a first portion of the flexible fastener in a first direction around the frame; positioning the flexible fastener through the at least one second passage transversely to the frame; and coupling the flexible fastener to the base assembly.

In an embodiment, the method includes: wrapping a second portion of the flexible fastener around the frame; positioning the flexible fastener through another second passage of the base assembly that extends transversely to the frame; coupling the flexible fastener to the base assembly in the other second passage; and removing a part of the flexible fastener extending outwardly from the base assembly after coupling the flexible fastener in the other second passage.

In an embodiment, the method includes tensioning the flexible fastener around the frame after coupling the flexible fastener to the base assembly by adjusting a fastener tensioner mounted to the base assembly. In a further embodiment, the method includes mounting the bracket or object to the base assembly after tensioning the flexible fastener.

In an embodiment, the method includes fixing a first end of the flexible fastener to the base assembly by restraining an end stop of the flexible fastener in a fastener receptacle of the base assembly. A flexible body of the flexible fastener is then extended through a slot that extends from the receptacle through the base assembly.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected.

It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A mounting system (10; 200) for mounting an object (16) or bracket (14) to a transportation device (18), the mounting system (10; 200) comprising:
a base assembly (30; 30'; 230) positionable against a frame (12) of the transportation device (18), the base assembly (30; 30'; 230) including a first passage (78; 78'; 278) orientable along the frame (12), the base assembly (30; 30'; 230) further including at least one second passage (80; 80'; 280, 282) transversely oriented to the first passage (78; 78'; 278);
a flexible fastener (20) including
an elongated flexible body (24) extending through the first passage (78; 78'; 278) and positionable around the frame (12) and through the at least one second passage (80; 80'; 280, 282); and
at least one fastener coupler (44; 44'; 118; 244, 246) to couple the flexible fastener (20) in the at least one second passage (80; 80'; 280, 282).

2. The mounting system (200) according to claim 1, wherein:
the at least one second passage of the base assembly includes two second passages (280, 282) at opposite ends of the base assembly (230) that each extend transversely to the first passage (278);
the elongated flexible body (24) of the flexible fastener (20) is positionable around the frame (12) from opposite ends of the first passage (278) and through each of the two second passages (280, 282); and
the at least one fastener coupler includes two fastener couplers (244, 246) that couple the flexible fastener (20) in respective ones of the two second passages (280, 282).

3. The mounting system (10; 200) according to claim 1 or 2, further comprising:
a fastener tensioner (34; 234) engageable to the base assembly (30; 30'; 230) and the flexible fastener (20), wherein the fastener tensioner (34; 234) is configured to tighten and tension the flexible fastener (20) around the frame (12) with the flexible body (24) of the flexible fastener (20) fixedly coupled to the base assembly (30; 30'; 230) with the fastener coupler (44; 44'; 118; 244, 246).

4. The mounting system (10; 200) according to claim 3, wherein the fastener tensioner (34) includes:
a slider (36; 236) engageable to the flexible fastener (20); and
a slider adjuster (38; 238) engageable to the base assembly (30; 30'; 230) and the slider (36; 236), the slider adjuster (38; 238) being configured to displace the slider (36; 236) relative to the base assembly (30; 30'; 230) to tighten the flexible fastener (20).

5. The mounting system (10; 200) according to claim 4, wherein the slider adjuster (38; 238) includes a slider nut (40; 240) and a slider screw (42; 242), and the base assembly (30; 30'; 230) includes a slider cavity (82; 283) for receiving the slider (36; 236),
and wherein the slider nut (40; 240) is received in a slider nut receptacle (84; 284) and the slider screw (42; 242) extends through the slider (36; 236) and the base assembly (30; 30'; 230) and engages the slider nut (40; 240) in the slider nut receptacle (84; 284).

6. The mounting system (10) according to claim 1, wherein a first end (26) of the flexible fastener (20) includes an end stop (22) with a flange that is positioned in a receptacle (76) of the base assembly (30; 30') to fixedly engage the flexible fastener (20) to the base assembly (30; 30'),
and wherein the flexible fastener (20) preferably includes a cable extending from the first end (26) to an opposite second end (28).

7. The mounting system (10; 200) according to any one of the preceding claims, wherein the at least one fastener coupler (44; 44'; 244; 246) is any one of the following, namely:
a threaded fastener (44; 244, 246) threadingly engaged to the base assembly (30; 230) to secure the flexible body (24) in the at least one second passage (80; 280, 282);
a clamp (44') that is engaged to the base assembly (30') to secure the flexible body (24) in the at least one second passage (80'); or
a plurality of pins (118) that project into the at least one second passage (80') to secure the flexible body (24) in the at least one second passage (80').

8. The mounting system (10; 200) according to any one of the preceding claims, wherein the base assembly (30; 30'; 230) includes a first plate (50; 50'; 250) and a second plate (52; 52'; 252), the second plate (52; 52'; 252) being positionable against the frame (12) and the first plate (50; 50'; 250) being positioned on the second plate (52; 52'; 252).

9. The mounting system (10; 200) according to claim 8, wherein the first plate (50; 250) includes an inner side (72; 272) facing the second plate (52; 252) and an opposite outer side (74; 274), the inner side (72; 272) including a first nut receptacle (90; 290) and a second nut receptacle (92; 292), the first plate (50; 250) further including a first fastener bore (86; 286) aligned with the first nut receptacle (90; 290) and a second fastener bore (88; 288) aligned with the second nut receptacle (92; 292).

10. The mounting system (10; 200) according to claim 9, further comprising a first nut (54; 254) in the first nut receptacle (90; 290) and a second nut (56; 256) in the second nut receptacle (92; 292),
wherein the mounting system (10; 200) preferably further comprises:
a first bracket fastener (104) extending through the first fastener bore (86; 286) and in engagement with the first nut (54; 254) in the first nut receptacle (90; 290); and
a second bracket fastener (106) extending through the second fastener bore (88; 288) and in engagement with the second nut (56; 256) in the second nut receptacle (92; 292), wherein the first and second bracket fasteners (104, 106) secure the object (16) or bracket (14) to the base assembly (30; 30'; 230).

11. The mounting system (10; 200) according to any one of claims 8 to 10, wherein the first plate (50; 250) includes the first passage (78; 278) and the at least one second passage (80; 280, 282), the first plate (50; 250) including an inner side (72; 272) facing the second plate (52; 252), and the second plate (52; 252) is positioned within a recess at the inner side (72; 272) of the first plate (50; 250); or
wherein the second plate (52') includes the first passage (78') and the at least one second passage (80'), the first plate (50') including an inner side facing the second plate (52'), and the second plate (52') is positioned within a recess at the inner side of the first plate (50').

12. A method for mounting an object (16) or bracket (12) to a transportation device (18), the method comprising:
positioning a base assembly (30; 30'; 230) against a frame (12) of the transportation device (18) with a first passage (78; 78'; 278) of the base assembly (30; 30'; 230) oriented along the frame (12) and at least one second passage (80; 80'; 280) oriented transversely to the frame (12);
positioning a flexible fastener (20) to extend through the first passage (78; 78'; 278);
wrapping a first portion of the flexible fastener (20) in a first direction around the frame (12);
positioning the flexible fastener (20) through the at least one second passage (80; 80'; 280) transversely to the frame (12); and
coupling the flexible fastener (20) to the base assembly (30; 30'; 230).

13. The method of claim 12, further comprising:
wrapping a second portion of the flexible fastener (20) in the first direction around the frame (12);
positioning the flexible fastener (20) through another second passage (282) of the base assembly (230) that extends transversely to the frame (12);
coupling the flexible fastener (20) to the base assembly (230) in the other second passage (282); and
removing a part of the flexible fastener (20) extending outwardly from the base assembly (230) after coupling the flexible fastener (20) in the other second passage (282).

14. The method of claim 12 or 13, further comprising:
tensioning the flexible fastener (20) around the frame (12) after coupling the flexible fastener (20) to the base assembly (30; 30'; 230) by adjusting a fastener tensioner (34; 234) mounted to the base assembly (30; 30'; 230),
and wherein the method preferably further comprises:
mounting the bracket (14) or object (16) to the base assembly (30; 30'; 230) after tensioning the flexible fastener (34; 234).

15. The method according to claim 12, further comprising fixing a first end (26) of the flexible fastener (20) to the base assembly (30; 30'), wherein fixing the first end (26) includes:
restraining an end stop (22) of the flexible fastener (20) in a fastener receptacle (76) of the base assembly (30; 30'); and
extending a flexible body (24) of the flexible fastener (20) through a slot (77) that extends from the receptacle (76) through the base assembly (30; 30').
